# EUROPEAN PATENT SPECIFICATION

(11) **EP 1 683 965 B1**
(45) Date of publication and mention of the grant of the patent: **26.12.2018**
(21) Application number: 06000030.4
(22) Date of filing: 02.01.2006
(51) Int. Cl.: F03D 7/02, F01D 1/30, F03D 1/06, F03D 7/04

(54) **Horizontal axis wind turbine**
Windturbine mit horizontaler Achse
Éolienne à axe horizontal

(30) Priority: 19.01.2005 JP 2005011225
(43) Date of publication of application: 26.07.2006
(73) Proprietor: Hitachi, Ltd., Chiyoda-ku Tokyo 100-8280 (JP)
(72) Inventor: Nagao, Toru, Shinjuku-ku Tokyo 160-8316 (JP)
(74) Representative: MERH-IP Matias Erny Reichl Hoffmann Patentanwälte PartG mbB

(56) References cited:
- CH-A5- 695 790
- DE-A1- 3 113 247
- GB-A- 2 347 976
- JP-A- 2003 035 249
- US-A- 4 371 346
- US-A- 4 439 108
- US-B1- 6 327 957

## Description

### CROSS-REFERENCE TO RELATED APPLICATIONS

This application is based upon and claims the benefit of priority from the prior Japanese Patent Application No. 2005-011225, filed on January 19, 2005.

### BACKGROUND OF THE INVENTION

### Field of the Invention

The present invention relates to a horizontal axis wind turbine, and more particularly to a horizontal axis wind turbine in which a rotating direction of a rotor changes according to a change of the wind direction by, for example, changing pitch angles of rotor blades, and further the direction of the wind turbine can be changed appropriately according to the change of the wind direction at its placed position.

### Description of the Related Art

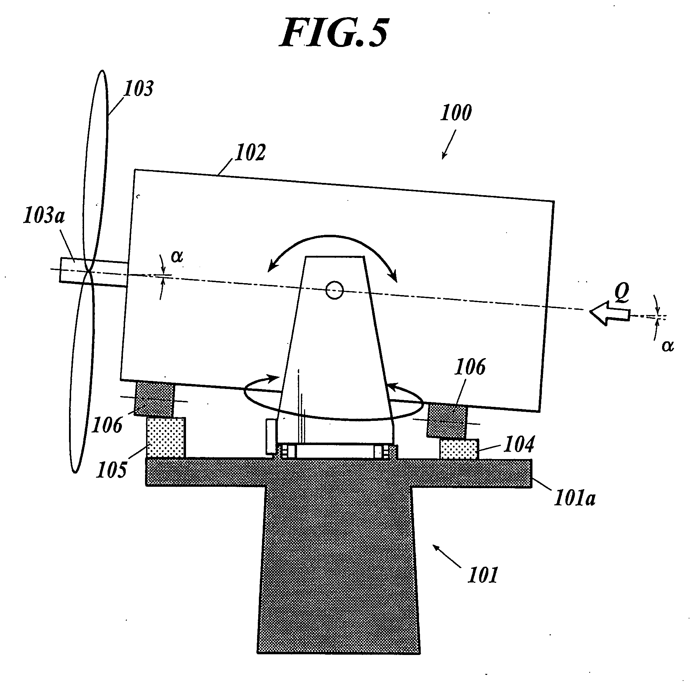

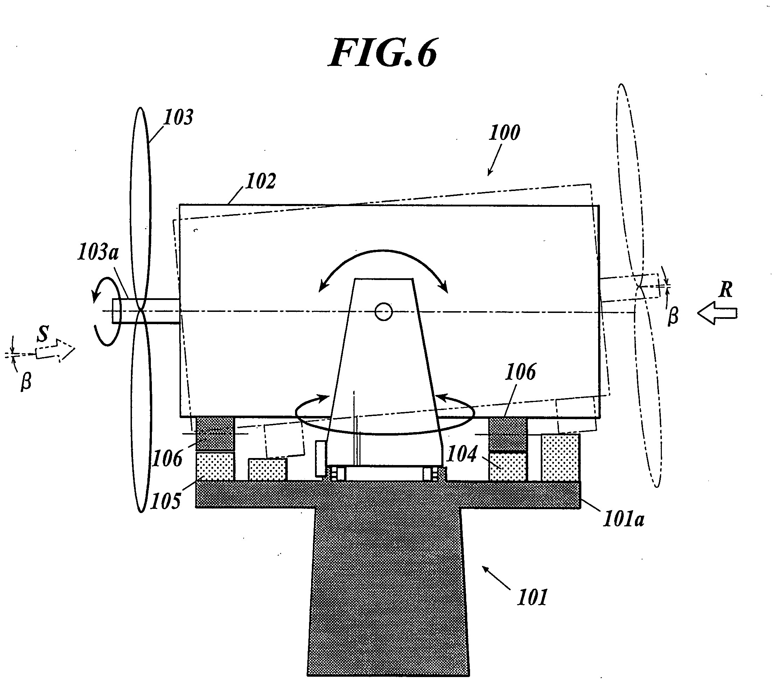

There has been known a horizontal axis wind turbine of downwind type, for example, as shown in FIG. 5, as a conventional example of a horizontal axis wind turbine which performs direction control according to a change of the wind direction. In the direction control of such a horizontal axis wind turbine, a rotor of the wind turbine is so controlled to face perpendicularly to or closely perpendicularly to a wind direction which has an azimuth angle of the wind turbine (or a displacement angle in a horizontal plane of a rotor shaft of the wind turbine) and a tilt angle of the wind turbine (or a displacement angle of a rotor shaft in a plane perpendicular to the above-described horizontal plane). This horizontal axis wind turbine utilizes a characteristic that an upflow angle or a downflow angle of a wind depends on the lay of the land. Specifically, when a wind direction toward a wind turbine 100 is, in a direction with a certain azimuth angle, one as indicated by an arrow Q in FIG. 5 having an angle of α to the horizontal plane, a nacelle 102 rotates on each of an inner cam track 104 and an outer cam track 105 so that a rotor shaft 103a of a rotor 103 turns to point to a certain azimuth angle of the wind direction and stops. At a stop position, a tilt angle, that is a wind-direction angle to the horizontal plane) is set to α, corresponding to the certain azimuth angle. Accordingly, the inclination angle of the rotor shaft 103a with respect to the upper surface of a tower head pedestal 101a in a plane parallel to the horizontal plane comes to be a. As a result, the wind turbine 100 comes to be a state that the rotor 103 faces perpendicularly to the flow of wind in the wind direction. Further, in FIG. 6 for example, when a wind direction toward the wind turbine 100 changes from an original wind direction (shown by solid lines) indicated by an arrow R in the figure to a wind direction (shown by dotted lines) indicated by an arrow S, the nacelle 102 changes its direction corresponding to the wind direction indicated by the arrow R so that the rotor shaft 103a turns to the flow direction of this azimuth angle and stops (at the stop position, a wind direction angle in the tilt angle direction is set to zero corresponding to the wind direction of this azimuth angle), and the wind turbine 100 comes to the state that the rotor 103 faces perpendicularly to the direction of the wind flow. When the wind direction changes to the direction indicated by the arrow S, the nacelle 102 rotates on the inner cam track 104 and the outer cam track 105 by 180 degrees so that the rotor 103 faces the wind flow in this azimuth angle and stops (at the stop position, a wind direction angle in the tilt angle direction is set to β corresponding to the wind direction of the azimuth angle). At this time, the wind turbine 100 becomes to a state that the rotor 103 faces perpendicularly to the flow of wind in the wind direction. Here, numeral 106 denotes a roller attached to the nacelle 102.

The horizontal axis wind turbine described above is so constructed that the nacelle moves to turn by 180 degrees when a wind flow in a direction of a certain azimuth angle changes to a wind flow in the opposite direction, and as to the displacement in a tilt angle direction corresponding to a wind direction in a certain azimuth angle direction, the cam tracks are provided with surfaces formed in advance so that the value of a tilt angle differs according to the azimuth angle. According to such a structure, the cam tracks have to be produced having different values of tilt angles correlative to azimuth angles for every installing position, and further a difficulty occurs in work for correcting the angle once set.

JP-2003-35249A (pages 2-4, and FIGS. 3 and 4) describes a horizontal wind turbine according to the prior art.

### SUMMARY OF THE INVENTION

An object of the invention is to provide a horizontal axis wind turbine that is not complicated in installation work and relatively flexible in correction after installation with respect to controlling an azimuth angle and a tilt angle according to a change of wind direction.

According to the first aspect of the invention, in the horizontal axis wind turbine, when a wind direction changes to blow against a rotor from a rear side, a pitch angle of a rotor blade of the rotor are controlled to reverse a rotation of the rotor, without turning of the rotor to the rear side.

Accordingly, because the change of pitch angle of the blades and the reverse in the rotating direction of the rotor can be performed without turning movement of a nacelle which was required by the above-described conventional example, installation work is not complicated due to omission of work for rotating the nacelle, and correction after installation becomes easier. As a result, the cost for maintenance can be cut down. In particular, the wind turbine is configured to change a pitch angle of the rotor blade corresponding to a change of wind direction to reverse a rotation direction of the rotor when the wind direction changes to a direction opposite to the original wind direction, without turning the nacelle by 180 degrees.

The horizontal axis wind turbine comprises: a nacelle to support the rotor; a tower head which the nacelle is mounted on and preferably comprises a rail with a circular or arc shape thereon; and a roller to support the nacelle, which is movable on and guided by the rail, to control an azimuth direction of the wind turbine. In the horizontal axis wind turbine, each roller is moved on the rail with a circular or arc shape, in a limited range to correspond to the change of wind direction in the range, which allows the wind turbine to be adjusted within a narrow range for the wind direction in the azimuth-angle direction.

Preferably, the horizontal axis wind turbine further comprises an extendable and retractable actuator with which the rail is supported on the tower head, to control an inclination angle of the wind turbine so as to coincide with an upflow or downflow angle of a wind.

According to such a horizontal axis wind turbine, the inclination angle can be controlled by extending and retracting the actuators without producing a special cam track which was required by the above-described conventional example, therefore installation cost can be reduced including omission of work to lift a large cam, and further a horizontal axis wind turbine more precisely facing the wind direction can be implemented.

In accordance with the second aspect of the invention, the horizontal axis wind turbine comprises: a rotor having a rotor blade; a nacelle to support a rotary shaft of the rotor; a tower head which the nacelle is mounted on and comprises a rail with a circular shape thereon supported by an extendable and retractable actuator; and a roller rotatably attached to the nacelle through a shaft, wherein the roller is movable to rotate on and guided by the rail, to coincide an azimuth direction of the wind turbine with the azimuth direction of a wind, and the actuator is extendable and retractable to make an inclination angle of the wind turbine coincide with an upflow or downflow angle of the wind. In particular the roller supports the nacelle, which is movable on and guided by the rail, to control an azimuth direction of the wind turbine within a limited range, which allows the wind turbine to be adjusted within a narrow range for the wind direction in the azimuth-angle direction.

According to such a horizontal axis wind turbine, in addition to the omission of work to lift the large cam, since the rotating shaft of the rotor can precisely follow the change of wind direction without being fixed to a direction, the wind turbine needs not to be repaired even when some changes are necessitated after the installation.

The horizontal axis wind turbine may be a downwind type.

Preferably, the rotor comprises a plurality of
rotor blades, and a pitch angle of each of the rotor blades is independently changeable to each other.

The pitch angle of a rotor blade is preferably changed by rotating the rotor blade about a pitch axis thereof.

The rotation of the rotor blade about the pitch axis may be performed by rotating a base end of the rotor blade by a motor provided in a hub, through a gear.

Preferably, the actuator is a hydraulic jack.

The horizontal axis wind turbine according to the invention allows the pitch angle of blades to be changed and the rotating direction of the rotor to be reversed when the wind turbine is fixed at a place where the wind direction is almost constant as for the seasons, or as in a coast side or a mountain side where a wind from the sea or an upflow wind blows in the daytime and a land wind or a downflow wind blows at night. Further, when the wind turbine is installed at a place where wind directions are changeable, in addition to the above-described changes of the pitch angle and the reverse of rotation, the wind turbine follows the azimuth direction of a wind using the rails and the rollers rotatably moving thereon, and controls the inclination angle by up-and-down control of the actuators to coincide with the wind direction. Accordingly, the wind turbine of the invention has advantages in that installation can be relatively easier and the change after the installation can be also easier.

### BRIEF DESCRIPTION OF THE DRAWINGS

The present invention will become more fully understood from the detailed description given hereinbelow and the accompanying drawing which are given by way of illustration only, and thus are not intended as a definition of the limits of the present invention, and wherein;
FIG. 1 is a perspective view showing a horizontal axis wind turbine according to a first embodiment of the present invention;
FIG. 2 is a view for illustrating the operation of the horizontal axis wind turbine;
FIG. 3A is a view for illustrating the operation of a horizontal axis wind turbine according to a second embodiment of the invention, and FIG. 3B is a partially sectional view taken along the line A-A in FIG. 3A;
FIG. 4 is a view for illustrating the operation of the horizontal axis wind turbine according to the second embodiment of the invention;
FIG. 5 is a view for illustrating the operation of a conventional horizontal axis wind turbine; and
FIG. 6 is a view for illustrating the operation of the conventional horizontal axis wind turbine.

### DETAILED DESCRIPTION OF THE PREFERRED EMBODIMENTS

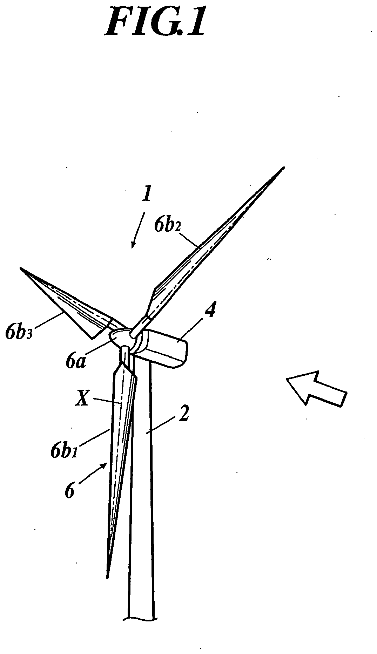

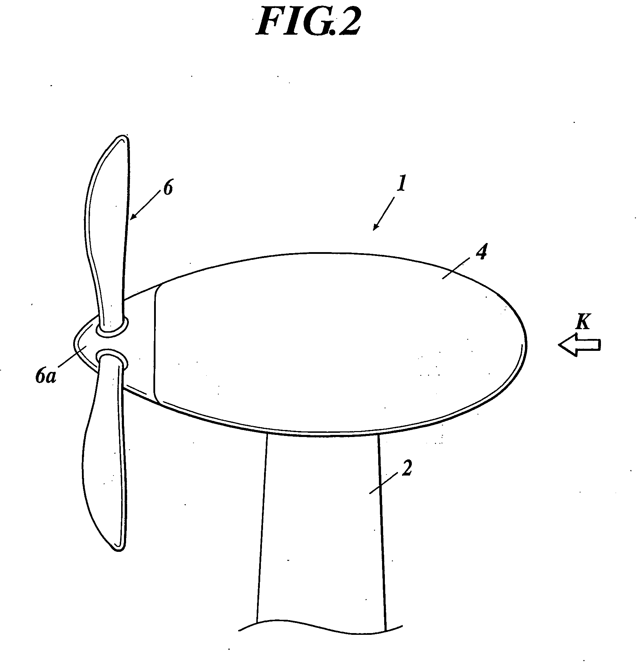

A horizontal axis wind turbine according to a first embodiment of the invention will be explained with reference to FIGS. 1 and 2. The wind turbine will be explained by using a downwind horizontal axis wind turbine 1 as shown in FIG. 2.

Such a horizontal axis wind turbine 1 includes a tower 2 placed on the ground, an approximately cylindrical nacelle 4 directly fixed to the tower 2, a rotor shaft (not shown) rotatably supported to the nacelle 4, a hub 6a fixed to the rotor shaft, and a rotor 6 having three blades 6b1-6b3 in the embodiment, each blade attached to the hub 6a so that its pitch angle is changeable. Each of the blades 6b1-6b3 is attached to the hub 6a so as to be perpendicular to the rotor shaft.

Regarding the change of the pitch angle in the horizontal axis wind turbine 1, each pitch angle of the blades 6b1-6b3 is independently changeable, though not shown particularly. For the blade 6b1, for example, the base end thereof is attached to a ring gear which is rotatably supported to the hub 6a through a bearing. The ring gear engages with a pinion which is driven by a motor fixed to the inside of the hub 6a. Thus, the blade is turned about a pitch axis X, so that the pitch angle of the blade 6b1 can be changed.

The control operation of the horizontal axis wind turbine 1 will be explained with reference to FIG. 2.

As described above, when the wind turbine 1 is placed on the lay of the land like coastline, it is required to control mainly the azimuth angle because wind directions are relatively stable such that a wind blows from the sea to the land in the daytime and from the land to the sea at night, and blows along the ground. For example, when a wind blows in the direction indicated by the arrow K in the figure in the daytime, the rotor 6 of the wind turbine 1 rotates with a rotating surface facing perpendicular to the flowing direction of the wind, and each of the blades 6b1-6b3 of the rotor 6 is controlled to have a predetermined pitch angle as described above. On the contrary, when the wind direction changes in a direction reverse to the arrow K at night, the wind turbine 1 changes the pitch angle of each of the blades 6b1-6b3 corresponding to the change of wind direction, to reverse the rotating direction of the rotor 6. Accordingly, the wind turbine 1 can correspond to the change of wind direction with change of the pitch angle of the blades 6b1-6b3 and with reverse of the rotating direction of the rotor 6 without rotational movement of the nacelle 4. Accordingly, the placement work for the wind turbine is not troublesome, and correction thereof after the placement can be performed easily and the cost therefor can be cut down.

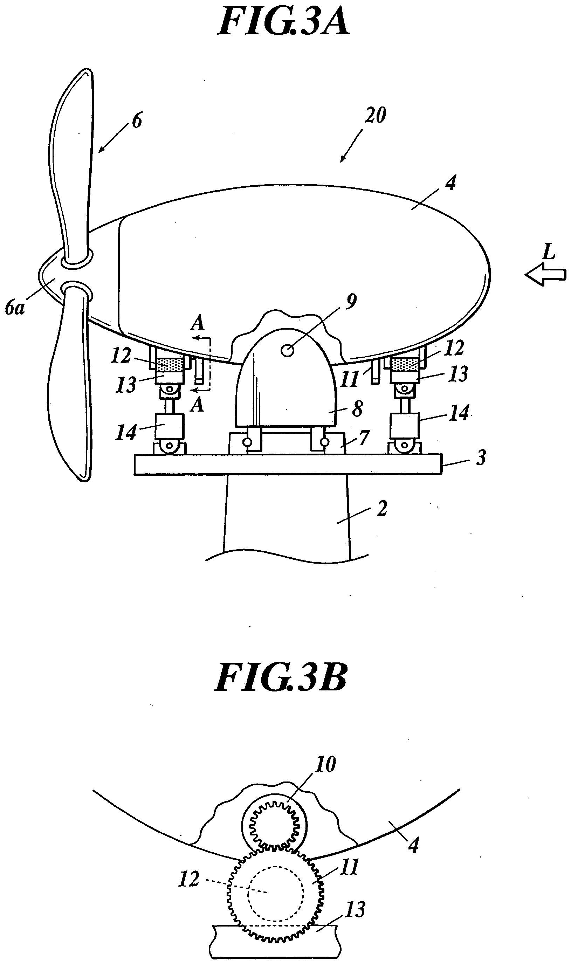

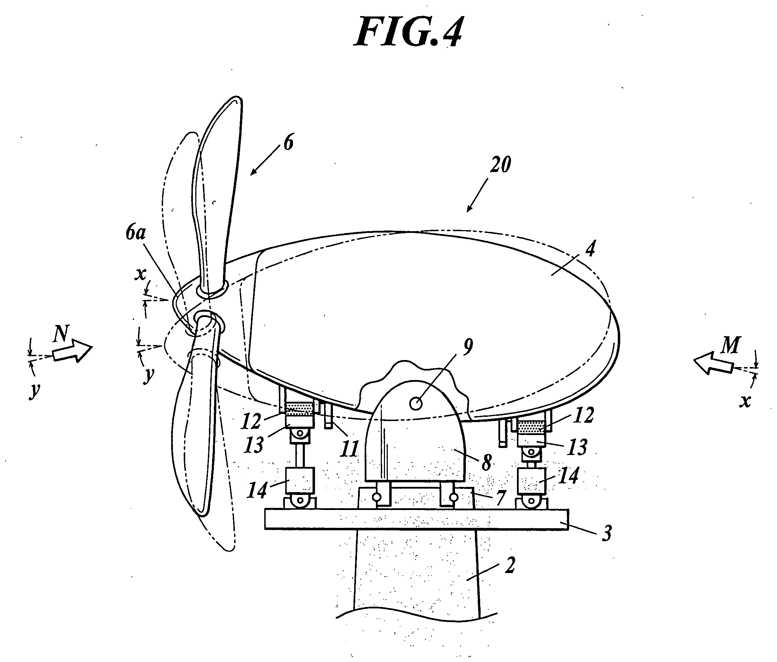

Next, a horizontal axis wind turbine according to a second embodiment of the invention will be explained with reference to FIGS. 3A, 3B and 4. Here, the elements in FIGS. 3A, 3B and 4 which are substantially the same as corresponding elements in FIGS. 1 and 2 are designated by the same reference numerals and the description thereof is omitted.

A horizontal axis wind turbine 20 is a downwind horizontal axis wind turbine similar to the above-described wind turbine 1. However, the wind turbine 20 can control azimuth angles and tilt angles according to the change of wind direction which is indicated by an arrow in FIG. 3A.

The horizontal axis wind turbine 20 includes, as shown in FIG. 3A, a tower head pedestal 3 arranged on the above-described tower 2 which is placed on the ground, and a nacelle support member 8 on which the nacelle 4 is disposed to be rotatable about a vertical axis above the pedestal 3 through a bearing 7. The support member 8 supports the nacelle 4 by a pin 9 disposed at the center lower part of the nacelle 4 so that the nacelle 4 can be swung in a direction perpendicular to the pedestal 3. Here, in the bearing 7, the inner ring side is mounted on the nacelle support member 8, and the outer ring is mounted on the pedestal 3.

The wind turbine 20 can be adjusted within a limited range for a wind in the azimuth-angle direction. Specifically, as shown in FIG. 3B, there are provided at the lower part of the nacelle 4 with a motor 10 and a gear 11 driven by the motor 10. The gear 11 rotates integrally with a roller 12 which is attached to a shaft fixed to the lower part of the nacelle 4. The rollers 12 are controlled to move on a plurality of rails 13 which are arranged in an arc-shape on the pedestal 3. In this embodiment, three arc-shaped rails 13 are provided. This allows the wind turbine 20 to be adjusted within a limited range for a wind direction in the azimuth-angle direction. Here, the arc-shaped rails 13 are not disposed directly on the pedestal 3 but are disposed on hydraulic jacks (actuators) 14 which can extend and retract in an up-and-down direction on the pedestal 3, which will be explained later.

Further, the horizontal axis wind turbine 20 has a structure which is compliant with a change of the wind direction in the tilt-angle direction. Specifically, a hydraulic jack 14 which is arranged between the pedestal 3 and each of the arc-shaped rails 13, as described above. The hydraulic jacks are controlled to extend or retract in the up-and-down direction so that the tilt angle of the rotor 6 changes in synchronism with the azimuth angle of the rotor 6 due to the wind direction. Such displacement of the tilt angle may be interlocked with the azimuth angle by setting in advance the correlation between a tilt angle and an azimuth-angle of wind direction, or may be determined such that, by measuring in advance the upflow angle or the downflow angle and the inclination angle of the rotor shaft, oil supply to the jacks may be stopped when both of the angles come into coincidence with each other.

The control operation of the horizontal axis wind turbine 20 will be explained with reference to FIGS. 3A and 3B.

When, for example, a wind blows in a direction indicated by an arrow L in the FIG. 3A in the daytime, the rotor 6 of the wind turbine 20 rotates with its rotating plane facing perpendicular to the flow of the wind direction, and each of the blades 6b1-6b3 is controlled to have a predetermined pitch angle as described above. However, when the wind direction changes to a direction reverse to the arrow L at night, the pitch angle of each of the blades 6bl-6b3 is changed corresponding to the change of wind direction to reverse the rotating direction of the rotor 6. When a limited range of adjustment is required for a wind direction in the azimuth-angle direction, the wind turbine 20 is controlled to drive the rollers 12 by the motor 10, to move along the arc-shaped rails 13 by a predetermined amount.

When the horizontal axis wind turbine 20 is placed on the lay of the land like a mountain side, a tilt angle and if needed, an azimuth angle are controlled, because a wind blows in the upper direction along the ground in the daytime, and blows in the lower direction at night. The control operation of the wind turbine 20 in such a case will be explained with reference to FIG. 4.

When a wind blows, in a direction with a certain azimuth angle, for example, as indicated by an arrow M in the Figure in the daytime, having an angle of "x" to the horizontal plane, the rotor 6 of the wind turbine 20 rotates with its rotating plane facing perpendicular to the flow of the wind direction, and each of the blades 6b1-6b3 is controlled to have a predetermined pitch angle as described above. Since a wind-direction angle in the tilt-angle direction is set to "x" corresponding to the wind direction in such an azimuth angle, the hydraulic jacks 14 are controlled to move in the up-and-down direction so that the rotor shaft has an inclination angle of "x" on the plane perpendicular to the pedestal 3. At this time, the wind turbine 20 is in a state that the rotation plane of the rotor 6 is perpendicular to the flow of the wind direction. On the contrary, when the wind direction changes at night to one in a certain azimuth-angle direction, as indicated by an arrow N of the rear side, having an angle of "y" influenced by the lay of the land where the tower 2 is placed (as shown by broken lines), the pitch angle of each of the blades 6b1-6b3 is changed to correspond to the wind direction changed, to reverse the rotating direction of the rotor 6. Further, since a wind-direction angle in the tilt-angle direction is set to "y" to correspond to the wind direction in such an azimuth angle, the hydraulic jacks 14 are controlled to move in the up-and-down direction so that the rotor shaft has an inclination angle of "y" in the plane perpendicular to the pedestal 3. At this time, the wind turbine 20 is in a state that the rotational plane of the rotor 6 is perpendicular to the flow of the wind direction. If a limited range of adjustment is required for a wind in the azimuth-angle direction, the wind turbine 20, as described above, is controlled to drive the rollers 12 by the motor 10, to move along the arc-shaped rails 13 by a predetermined amount.

The horizontal axis wind turbine of the invention placed in a coast side or a mountain side can control its azimuth angle and tilt angle according to the particular situation, by selecting the control of azimuth angles and tilt angles according to the change of wind direction due to the seasons or the day and night. It enables reducing difficulties in placement of horizontal axis wind turbines and cutting down a building cost relative to electric power generation by effectively utilizing the wind. Accordingly, the invention has high utility value in such places that have lots of coastlines and mountainous regions as in Japan.

## Claims

1. A horizontal axis wind turbine (1), comprising:
one rotor (6) having a rotor blade (6b1, 6b2, 6b3);
a nacelle (4) to support the rotor (6); and
a tower (2) having a tower head (3) on which the nacelle (6) is mounted,
**characterized in that** the wind turbine (1) is configured to change a pitch angle of the rotor blade (6b1, 6b2, 6b3) corresponding to a change of wind direction to reverse a rotation direction of the rotor (6) when the wind direction changes to a direction opposite to the original wind direction, without turning the nacelle (4) by 180 degrees.

2. The horizontal axis wind turbine (1) according to claim 1, wherein
the tower head (3) comprises a rail (13) with a circular or arc shape thereon; and
the horizontal axis wind turbine (1) further comprising
a roller (12) to support the nacelle (4), which is movable on and guided by the rail (13), to control an azimuth direction of the wind turbine (1) within a limited range, which allows the wind turbine to be adjusted within a narrow range for the wind direction in the azimuth-angle direction.

3. The horizontal axis wind turbine (1) according to claim 2, further comprising
an extendable and retractable actuator (14) through which the rail (13) is supported on the tower head (3), to control an inclination angle of the wind turbine (1) so as to coincide with an upflow or downflow angle of a wind.

4. The horizontal axis wind turbine (1) according to any one of claims 1-3,
wherein the horizontal axis wind turbine (1) is a downwind type.

5. The horizontal axis wind turbine (1) according to any one of claims 1-4,
wherein the rotor (6) comprises a plurality of rotor blades (6b1, 6b2, 6b3), and a pitch angle of each of the rotor blades (6b1, 6b2, 6b3) is independently changeable to each other.

6. The horizontal axis wind turbine (1) according to claim 5, wherein the pitch angle of a rotor blade (6b1, 6b2, 6b3) is changed by rotating the rotor blade (6b1, 6b2, 6b3) about a pitch axis thereof.

7. The horizontal axis wind turbine (1) according to claim 6, wherein rotation of the rotor blade (6b1, 6b2, 6b3) about the pitch axis is performed by rotating a base end of the rotor blade (6b1, 6b2, 6b3) by a motor provided in a hub (6a), through a gear.

8. The horizontal axis wind turbine (1) according to claim 3, wherein the actuator (14) is a hydraulic jack.

## Patentansprüche

1. Windkraftanlage (1) mit horizontaler Achse, die Folgendes enthält:
einen Rotor (6), der ein Rotorblatt (6b1, 6b2, 6b3) besitzt;
eine Gondel (4), um den Rotor (6) zu tragen; und
einen Turm (2), der einen Turmkopf (3), an dem die Gondel (6) montiert ist, besitzt,
**dadurch gekennzeichnet, dass** die Windkraftanlage (1) konfiguriert ist, einen Anstellwinkel des Rotorblattes (6b1, 6b2, 6b3) entsprechend einer Änderung der Windrichtung zu ändern, um eine Drehrichtung des Rotors (6) umzukehren, wenn sich die Windrichtung zu einer Richtung, die der Originalwindrichtung entgegengesetzt ist, ändert, ohne die Gondel (4) um 180 Grad zu drehen.

2. Windkraftanlage (1) mit horizontaler Achse nach Anspruch 1, wobei
auf dem Turmkopf (3) eine Schiene (13) mit einer kreisförmigen oder bogenförmigen Form vorhanden ist; und
die Windkraftanlage (1) mit horizontaler Achse ferner Folgendes enthält:
ein Wälzelement (12), um die Gondel (4) zu tragen, das beweglich auf der Schiene (13) und durch sie geführt ist, um eine Azimutrichtung der Windkraftanlage (1) in einem beschränkten Bereich zu steuern, was der Windkraftanlage ermöglicht, in einem schmalen Bereich an die Windrichtung in der Azimutwinkelrichtung angepasst zu werden.

3. Windkraftanlage (1) mit horizontaler Achse nach Anspruch 2, die ferner Folgendes enthält:
einen ausfahrbaren und zurückziehbaren Aktor (14), durch den die Schiene (13) auf dem Turmkopf (3) getragen wird, um einen Neigungswinkel der Windkraftanlage (1) derart zu steuern, dass er mit einem Aufwärtsströmungswinkel oder einem Abwärtsströmungswinkel eines Windes übereinstimmt.

4. Windkraftanlage (1) mit horizontaler Achse nach einem der Ansprüche 1-3, wobei
die Windkraftanlage (1) mit horizontaler Achse von einem Windrichtungstyp ist.

5. Windkraftanlage (1) mit horizontaler Achse nach einem der Ansprüche 1-4,
wobei
der Rotor (6) mehrere Rotorblätter (6b1, 6b2, 6b3) enthält und ein Anstellwinkel jedes der Rotorblätter (6b1, 6b2, 6b3) unabhängig von den weiteren änderbar ist.

6. Windkraftanlage (1) mit horizontaler Achse nach Anspruch 5, wobei Anstellwinkel von einem Rotorblatt (6b1, 6b2, 6b3) durch Drehen des Rotorblattes (6b1, 6b2, 6b3) um seine Anstellachse geändert wird.

7. Windkraftanlage (1) mit horizontaler Achse nach Anspruch 6, wobei eine Drehung des Rotorblattes (6b1, 6b2, 6b3) um seine Anstellachse durch Drehen eines Basisendes des Rotorblattes (6b1, 6b2, 6b3) durch einen Motor, der in einer Nabe (6a) vorgesehen ist, über ein Getriebe durchgeführt wird.

8. Windkraftanlage (1) mit horizontaler Achse nach Anspruch 3, wobei der Aktor (14) ein Hydraulikheber ist.

## Revendications

1. Turbine éolienne à axe horizontal (1), comprenant :
un rotor (6) ayant une pale de rotor (6b1, 6b2, 6b3) ;
une nacelle (4) pour supporter le rotor (6) ; et
une tour (2) ayant une tête de tour (3) sur laquelle la nacelle (6) est montée,
**caractérisée en ce que** la turbine éolienne (1) est configurée pour changer un angle d'incidence de la pale de rotor (6b1, 6b2, 6b3) correspondant à un changement de la direction du vent pour inverser une direction de rotation du rotor (6) quand la direction du vent change vers une direction opposée à la direction d'origine du vent, sans tourner la nacelle (4) de 180°.

2. Turbine éolienne à axe horizontal (1) selon la revendication 1, dans laquelle
la tête de tour (3) comprend sur elle-même un rail (13) avec une forme circulaire ou une forme en arc ; et
la turbine éolienne à axe horizontal (1) comprend en outre
un galet (12) pour supporter la nacelle (4), qui est déplaçable sur et guidé par le rail (13), afin de commander une direction azimutale de la turbine éolienne (1) à l'intérieur d'une plage limitée, ce qui permet d'ajuster la turbine éolienne à l'intérieur d'une plage étroite pour la direction du vent dans la direction de l'angle azimutal.

3. Turbine éolienne à axe horizontal (1) selon la revendication 2, comprenant en outre :
un actionneur susceptible d'être déployé et rétracté (14), au moyen duquel le rail (13) est supporté sur la tête de tour (3), pour commander un angle d'inclinaison de la turbine éolienne (1) de manière à coïncider avec un angle d'écoulement entrant ou d'écoulement sortant du vent.

4. Turbine éolienne à axe horizontal (1) selon l'une quelconque des revendications 1 à 3, dans lequel la turbine éolienne à axe horizontal (1) est du type sous le vent.

5. Turbine éolienne à axe horizontal (1) selon l'une quelconque des revendications 1 à 4,
dans laquelle le rotor (6) comprend une pluralité de pales de rotor (6b1, 6b2, 6b3), et un angle d'incidence de chacune des pales de rotor (6b1, 6b2, 6b3) est susceptible d'être changé indépendamment des autres.

6. Turbine éolienne à axe horizontal (1) selon la revendication 5, dans laquelle l'angle d'incidence d'une pale de rotor (6b1, 6b2, 6b3) est changé en faisant tourner la pale de rotor (6b1, 6b2, 6b3) autour d'un axe d'incidence de celle-ci.

7. Turbine éolienne à axe horizontal (1) selon la revendication 6, dans laquelle une rotation de la pale de rotor (6b1, 6b2, 6b3) autour de l'axe d'incidence est effectuée en faisant tourner une extrémité de base de la pale de rotor (6b1, 6b2, 6b3) par un moteur prévu dans un moyeu (6a), par l'intermédiaire d'un engrenage.

8. Turbine éolienne à axe horizontal (1) selon la revendication 3, dans laquelle l'actionneur (14) est un vérin hydraulique.
